# DEMANDE DE BREVET EUROPEEN

(11) **EP 1 703 404 A1**
(43) Date de publication de la demande: **20.09.2006**
(21) Numéro de dépôt: 05102054.3
(22) Date de dépôt: 16.03.2005
(51) Int. Cl.: G06F 12/08

(54) **Méthode et système pour maintenir la cohérence d'une mémoire cache utilisée par de multiples processus indépendants**

(71) Demandeur: Amadeus s.a.s, 06410 Biot (FR)
(72) Inventeur: Ros, Frédérick c/o Cabinet Hautier, 06000, Nice (FR); Daniello, Rudy, c/o Cabinet Hautier, 06000, Nice (FR); Isnardy, Luc c/o Cabinet Hautier, 06000, Nice (FR); Reynaud, Claudine c/o Cabinet Hautier, 06000, Nice (FR); Rubenstein, Wayne c/o Cabinet Hautier, 06000, Nice (FR)
(74) Mandataire: Decobert, Jean-Pascal

(57) **Abrégé**

Une méthode et un système pour maintenir la cohérence d'une mémoire cache, accessible par des processus indépendants, sont décrits. Les processus peuvent partager des données communes. Les processus effectuent des opérations simultanées de recherche des données suivies optionnellement par une mise à disposition des données aux processus, d'un enlèvement de celles-ci ou d'une insertion de nouvelles données. Les opérations de recherche, d'enlèvement et d'insertion, s'exécutent exhaustivement une fois qu'elles ont été initiées par les processus indépendants. Elles s'exécutent exclusivement l'une de l'autre quand elles doivent opérer sur des données communes. Les opérations d'enlèvement ou d'insertion sont chacune complètement réversibles.

La méthode et le système selon l'invention permettent de maintenir sur le long terme la cohérence et les performances d'une mémoire cache.

## Description

### DOMAINE TECHNIQUE DE L'INVENTION

La présente invention concerne l'ingénierie logicielle en général et décrit plus particulièrement une méthode et un système pour maintenir à long terme la cohérence des données dans une mémoire cache partagée par des processus indépendants dans un environnement informatique exigeant une disponibilité permanente de ces données et assurant des temps d'accès courts à celles-ci.

### ÉTAT DE LA TECHNIQUE

Si la puissance de calcul des ordinateurs et de leur unité centrale de traitement (UC or CPU c'est-à-dire 'Central Processing Unit' dans la littérature technique anglaise) n'a cessé d'augmenter considérablement au fil des années, des applications logicielles de plus en plus exigeantes arrivent dans le même temps à utiliser cette accroissement de puissance de traitement en mettant à contribution toujours plus ces unités centrales. C'est en particulier le cas quand celles-ci doivent accéder à des données disponibles dans une mémoire centralisée pouvant avoir à regrouper d'énormes quantités d'information comme par exemple les bases de données rassemblant les offres mondiales du trafic aérien. Celles-ci doivent pouvoir être consultées en permanence à partir d'innombrables agences de voyage et points de ventes et mises à jour par les compagnies aériennes, dans le monde entier, 7 jours sur 7 et 24 heures sur 24.

Quels que soient les configurations, réseaux d'ordinateurs et solutions informatiques utilisées pour obtenir ce résultat les performances attendues, notamment de courts temps d'accès aux informations recherchées, passent toujours par l'utilisation d'une hiérarchie de mémoires. Les informations recherchées doivent en effet être amenées dans une mémoire que les unités centrales peuvent accéder suffisamment rapidement même si une telle mémoire ne peut alors contenir l'ensemble des informations susceptibles d'être recherchées. Ce type de mémoire est appelé mémoire cache ou antémémoire. La mémoire cache sert à stocker les données auxquelles un système fait, à un moment donné, le plus souvent appel permettant ainsi de réduire les états d'attente des unités centrales et processeurs des ordinateurs.

La taille nécessairement limitée d'une mémoire cache doit pouvoir être partagée entre les différents processus indépendants qui doivent s'exécuter simultanément dans les unités centrales. De plus, quand ils travaillent sur des données communes, les multiples taches indépendantes doivent de préférence pouvoir le faire sans avoir à dupliquer ces données.

La gestion d'une mémoire cache partagée entre de multiples processus est donc une affaire complexe. En particulier il est impératif de maintenir la cohérence des données communes à plusieurs processus. Si l'un d'eux doit modifier les dites données il est particulièrement important qu'un autre processus ne puisse les utiliser avant qu'elles aient été complètement modifiées et mises à jour. S'il est bien connu que cela peut s'obtenir par l'échange de messages entre processus il s'agit là d'une méthode qui impacte cependant gravement les performances d'accès à ces données en raison du temps nécessaire pour l'échange des messages.

Une autre méthode couramment pratiquée consiste à permettre qu'un processus obtienne seul, temporairement, le droit d'accès à des données partagées bloquant ainsi l'accès des autres processus qui doivent attendre. Cependant, une fois qu'un processus a obtenu un tel droit d'accès exclusif il peut aussi avoir à attendre lui-même qu'un autre processus libère des données qu'il doit aussi utiliser. II y a donc évidemment des cas ou deux ou plusieurs processus se verrouillent. L'un attendant que l'autre se termine et réciproquement. Les tâches que doivent exécuter ces processus n'avancent plus. II y a blocage.

Bien entendu on peut aussi avoir autant de mémoires cache que de processus. II y a donc réplication des données communes dans la mémoire cache, ce que l'on voulait éviter en premier lieu afin utiliser au mieux l'espace mémoire disponible, et qui pose à nouveau le problème de la cohérence des réplications à l'intérieur de cette dernière.

Par ailleurs, une mémoire cache ne contient pas seulement des données de travail utilisées par les processus eux-mêmes mais doit être strictement organisée. Une mémoire cache est en effet toujours une vue partielle, hautement dynamique, de l'ensemble des données présentent dans une mémoire plus lente, bon marché, mais de très grande taille et située en arrière plan, typiquement, des batteries de disques magnétiques pouvant stocker des téraoctets (10¹² octets) de données. Ces données de travail sont toutes potentiellement accessibles par les processus à un moment donné après leur transfert dans la mémoire cache partagée. Les données d'organisation de la mémoire cache doivent donc toujours permettre de maintenir la cohérence entre les données de travail, effectivement présentes à un moment donné dans la mémoire cache, et leur correspondance dans la mémoire située en arrière plan. Cependant, si un processus vient à être interrompu avant sa fin normale (simplement, par exemple, parce qu'un opérateur à mis fin prématurément à une requête) ou s'il s'exécute incorrectement en raison d'une faiblesse de programmation du logiciel, il peut donc arriver que les données d'organisation de la mémoire cache ne soient pas mises à jour complètement ou qu'elles le soient d'une façon incorrecte. Les tables de contrôle qui contiennent ces données d'organisation deviennent alors partiellement corrompues. Si, en général, les logiciels d'application sont conçus pour être tolérants aux pannes et erreurs afin d'éviter que des corruptions partielles n'entraînent de conséquences majeures, leur accumulation dans un système qui doit être opérationnel 24 heures sur 24 dégrade à long terme les performances et l'efficacité de la mémoire cache notamment en réduisant la taille effectivement utilisable de celle-ci ce qui ne permet plus d'amener autant de données de travail partageables par l'ensemble des processus qui doivent se dérouler à un moment donné pour satisfaire les multiples requêtes en provenance des ordinateurs devant accéder de très grandes bases de données comme celles contenant les informations sur le trafic aérien mondial ou les réservations des grandes chaînes hôtelières.

La taille effectivement utilisable d'une mémoire cache est donc un paramètre clef de son fonctionnement. Son remplissage doit être optimum. En particulier un processus doit toujours pouvoir amener des données de travail nouvelles, pour satisfaire de nouvelles requêtes clients, et cela même si la mémoire cache est déjà pleine. Cela ne peut alors se faire qu'en libérant de la place et, donc, en enlevant de la mémoire les données de travail les moins susceptibles d'être réutilisées ou celles qui sont effectivement périmées. Cette gestion est compliquée par le fait que les processus sont complètement indépendants les uns des autres. Une solution couramment utilisée consiste alors à avoir une tâche de fond qui s'exécute en plus de tous les processus pour mettre à jour les tables de contrôle de la mémoire cache et libérer les données de travail qui sont périmées ou trop anciennes. Cette solution présente le grave inconvénient, que si la tâche de fond ne s'exécute plus normalement, la mémoire cache devient rapidement inutilisable puisqu'elle se remplit de données périmées. De plus la tâche de fond ne pourra pas en général libérer des données corrompues par un processus qui ne s'est pas exécuté complètement ou normalement.

Dans un système qui doit fonctionner 24 heures sur 24 et qui n'est donc jamais redémarré, la fiabilité ne doit pas reposer sur le bon fonctionnement d'un élément unique typiquement, la tache de fond décrite ci-dessus, comme c'est souvent cependant le cas.

### OBJET DE L'INVENTION

L'objet principal de l'invention est donc de remédier aux faiblesses de l'art antérieur décrites ci-dessus et plus particulièrement de proposer une méthode et un système pour mettre en oeuvre une mémoire cache dont les capacités et performances demeurent intactes au fil du temps quelle que soit sa durée d'utilisation sans redémarrage.

Un autre objet de l'invention est d'assurer que le bon fonctionnement d'une mémoire cache ne puisse dépendre d'une tâche unique.

C'est aussi un objet de l'invention que l'interruption anormale d'un processus ne puisse conduire à laisser des données de travail ou d'organisation corrompues dans la mémoire cache et ses tables de contrôle.

C'est également un objet de l'invention que de permettre que des processus indépendants puissent partager des données communes sans duplication de celles-ci et en évitant tout verrouillage entre processus.

Les autres objets, caractéristiques et avantages de la présente invention apparaîtront aux spécialistes à l'examen de la description suivante et des dessins d'accompagnement. II est entendu que d'autres avantages peuvent être incorporés.

### RÉSUMÉ DE L'INVENTION

L'invention décrit une méthode et un système pour maintenir la cohérence d'une mémoire cache accessible par des processus indépendants. Les processus peuvent partager des données communes et effectuer des opérations simultanées de recherche des données suivies optionnellement par une mise à disposition des données aux processus, d'un enlèvement de celles-ci ou d'une insertion de nouvelles données. Les opérations de recherche, d'enlèvement et d'insertion, s'exécutent exhaustivement une fois qu'elles ont été initiées par les processus indépendants. Elles s'exécutent exclusivement l'une de l'autre quand elles doivent opérer sur des données communes. Les opérations d'enlèvement ou d'insertion sont chacune complètement réversibles.

La présente invention concerne une méthode pour maintenir la cohérence d'au moins une mémoire cache, la dite au moins une mémoire cache accessible par une pluralité de processus indépendants, la dite pluralité de processus pouvant partager des données communes, la dite pluralité de processus effectuant des opérations de recherche simultanées des dites données, les dites opérations de recherche suivies optionnellement d'une mise à disposition, d'un enlèvement ou d'une insertion des dites données. Cette méthode est telle que
- les dites opérations de recherche, d'enlèvement et d'insertion, s'exécutent exhaustivement une fois qu'elles ont été initiées par la dite pluralité de processus indépendants ;
- les dites opérations de recherche, d'enlèvement et d'insertion, initiées par la dite pluralité de processus indépendants, s'exécutent exclusivement l'une de l'autre quand elles opèrent sur les dites données communes ;
- les dites opérations d'enlèvement ou d'insertion sont chacune complètement réversibles.

Suivant des variantes préférées, la méthode est telle que
- elle fait appel à une pluralité de tables pour organiser la dite mémoire cache, la dite pluralité de tables incluant :
- une table de données ;
- une table de contrôle ;
- une table des partitions de la table de contrôle ;
- une table de hachage,
- chacune des dites opérations de recherche initiée par l'un des processus débute par l'interrogation d'une entrée de la dite table de hachage, la dite entrée étant alors verrouillée temporairement pour tous ceux de la dite pluralité de processus qui ne l'ont pas initiée et seulement si la dite opération de recherche doit entraîner une modification du contenu de la dite mémoire cache,
- la dite entrée verrouillée est déverrouillée à l'issue d'une des dites opérations d'enlèvement ou d'insertion,
- les dites opérations de recherche suivies d'une des dites opérations de mise à disposition, d'enlèvement ou d'insertion des dites données ont une durée finie ou bornée d'exécution,
- les dites opérations réversibles d'enlèvement et d'insertion incluent les étapes suivantes consistant à :
   - sauvegarder le contexte des dites entrées de tables à modifier avant que les dites opérations ne s'exécutent ;
   - établir, en cours d'exécution, un état d'achèvement des dites opérations ;
   - restaurer le contexte des dites entrées de tables si le dit état d'achèvement conclut à une fin anormale ou prématurée des dites opérations.
- la dite opération d'insertion inclut une étape de libération d'une entrée dans une partition de la dite table de contrôle si la dite partition est pleine, la dite méthode consistant à :
   - parcourir la dite partition afin d'opérer un choix, le dit parcours étant possiblement interrompu si un temps de parcours maximum est atteint ;
   - sélectionner l'entrée la plus appropriée parmi les entrées parcourues ;
   - libérer la dite l'entrée.
- l'étape de sélection d'une entrée à libérer utilise les informations suivantes pour effectuer le dit choix :
   - une comparaison du temps d'expiration associé aux données de la dite entrée au temps courant ;
   - une mesure de l'utilisation effective par les dits processus des données de la dite entrée,
- elle inclue une étape de verrouillage et une étape de déverrouillage de la table des partitions lors d'une mise à jour des entrées libres,
- elle permet l'exécution simultanée des dits processus indépendants qui utilisent des entrées différentes dans la dite table de hachage,
- elle permet qu'une pluralité de mémoires cache coexistent et que les dits processus puissent utiliser la dite pluralité de mémoires cache en même temps,
- elle comprend un système, et notamment une mémoire cache utilisée pour mettre à disposition d'une pluralité d'unités centrales de traitement des données stockées dans une mémoire de masse, le dit système comprenant des moyens adaptés pour mettre en oeuvre la méthode décrite dans l'une quelconque des revendications précédentes,
- elle comprend un support lisible par ordinateur comprenant les instructions d'un programme exécutable par le dit ordinateur, le dit programme mettant en oeuvre la méthode selon l'invention.

### BRÈVE DESCRIPTION DES FIGURES

Les buts, objets, ainsi que les caractéristiques et avantages de l'invention ressortiront mieux de la description détaillée d'un mode préféré de réalisation de cette dernière qui est illustré par les dessins d'accompagnement suivants dans lesquels :
La FIGURE 1 décrit l'environnement dans lequel l'invention est mise en oeuvre.
La FIGURE 2 illustre le partage d'une ELC par des processus indépendants.
La FIGURE 3 décrit le cas de où plusieurs ELC sont accédées par des processus indépendants.
La FIGURE 4 décrit la structure des tables de données d'une ELC.
La FIGURE 5 décrit la table de contrôle associée aux tables de données.
La FIGURE 6 donne un exemple du contenu d'une partition de la table de contrôle.
La FIGURE 7 décrit la structure de la table des partitions.
La FIGURE 8 décrit la structure et l'adressage de la table de hachage.
La FIGURE 9 décrit la méthode de recherche des données dans une ELC.
La FIGURE 10 décrit les méthodes pour la mise à disposition, l'enlèvement, le remplacement et l'insertion de données dans une ELC.
La FIGURE 11 décrit la méthode pour libérer une entrée dans une table de données pleine.
La FIGURE 12 décrit les étapes de l'exécution d'un processus servant à maintenir la cohérence des tables.

### DESCRIPTION DÉTAILLÉE DE L'INVENTION

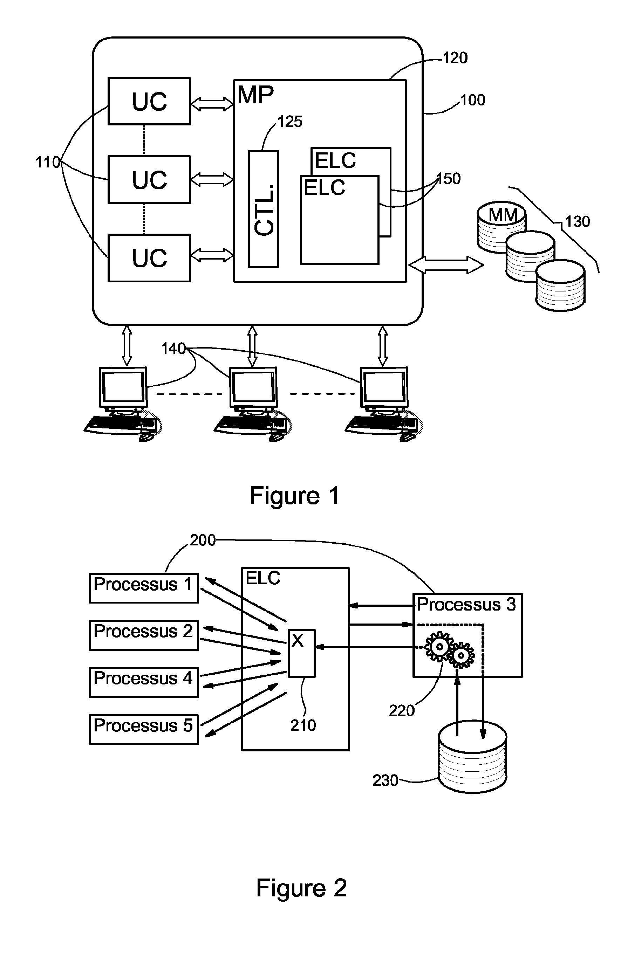

Comme schématisé en figure 1 l'invention se place dans le contexte d'un système (100) incluant une ou plusieurs unités centrales (UC) d'ordinateurs (110) partageant un moyen de stockage rapidement accessible (120). Quoique limitée en taille la mémoire partagée (MP) peut elle-même accéder à une ou plusieurs mémoires de masse (MM) situées en arrière plan et constituées généralement de batteries de disques magnétiques (130) pouvant mémoriser de très grandes quantités de données. Notamment des bases de données, comme par exemple celles qui doivent être consultées par les agences de voyage à travers le monde et qui rassemblent l'ensemble des informations sur le trafic aérien mondial ou les états de réservation des chaînes hôtelières internationales. Les unités centrales opèrent sous le contrôle d'un système d'exploitation. Par exemple, UNIX est un système d'exploitation souvent utilisé car il permet de traiter non seulement de nombreux utilisateurs (140) simultanément mais il est aussi capable de gérer un grand nombre de tâches ou processus qui opèrent indépendamment en même temps. Ainsi, dans la mémoire partagée qui comprend un organe de contrôle (125), le système d'exploitation, directement ou par l'intermédiaire de couches logicielles supplémentaires intégrées au système d'exploitation, permet de définir une ou plusieurs entités logiques de cache (ELC). Comme déjà discuté dans le paragraphe sur l'état de la technique le but de ces mémoires cache (150) est de pouvoir amener dans une mémoire à accès rapide, la mémoire partagée (120), depuis la mémoire de masse (130), les données sur lesquelles les processus indépendants, initiés par les unités centrales (110), doivent pouvoir travailler à un instant donné.

La figure 2 décrit plus particulièrement un aspect nouveau de l'invention qui permet que des processus indépendants (200), dans cet exemple référencés de 1 à 5, puissent partager une entité de données communes (210) après qu'un seul de ces processus, celui portant le numéro 3 dans cet exemple, ait eu besoin de retrouver les données dans la mémoire de masse (230), et ait eu à effectuer les mises en forme et calculs nécessaires (220) pour leur utilisation effective par l'ensemble des processus susceptibles d'avoir à travailler sur ces données à un instant donné. Cette façon de faire conduit à minimiser grandement les besoins de stockage dans les mémoires cache contenues dans la mémoire partagée augmentant, à taille égale, son efficacité et soulage beaucoup les unités centrales puisque les calculs de mises en forme ne sont effectués que par le seul processus portant le numéro 3 dans cet exemple.

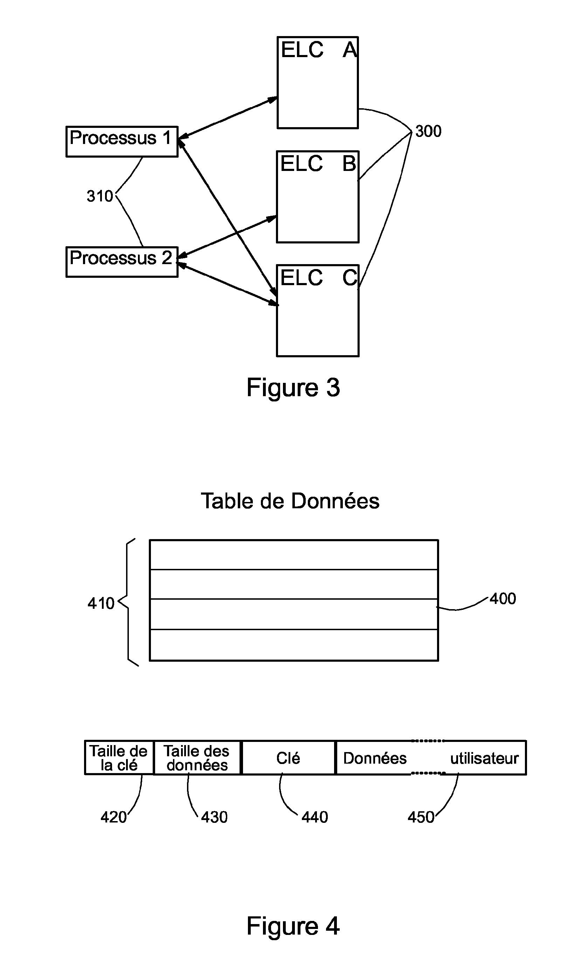

La figure 3 a pour but de montrer que si les données peuvent être avantageusement partagées entre les processus dans une même ELC l'invention permet aussi, dans le cas ou plusieurs ELC coexistent (300) dans la mémoire partagée, que les processus (310) n'aient pas obligatoirement accès à toutes les ELC. Ainsi, dans cet exemple particulier, le processus 1 a accès aux ELC A et C tandis que le processus 2 a lui accès aux ELC B et C. Seules les données présentes dans l'ELC C sont donc communes aux processus 1 et 2 ce qui peut s'avérer utile pour empêcher, par exemple, que le processus 2 ne puisse altérer des données que seul le processus 1 est autorisé à modifier, données qui seront alors contenues de préférence dans l'ELC A.

Les figures qui suivent décrivent les différentes tables utilisées par une ELC pour retrouver et mettre à jour les données contenues à un moment donné dans la mémoire cache. La figure 4 décrit l'organisation d'une table de données. Comme le nom le suggère une table de données (400) sert avant tout à mémoriser les données utilisateur ainsi que la clef unique ou identifiant associée à celles-ci et des paramètres décrits ci-après. Le nombre maximum de tables de données qui peuvent être présentes dans une ELC est paramétrable lors de la configuration du système. Par exemple, on pourra autoriser la création d'une centaine de tables de données. De plus chacune de ces tables pourra comprendre un nombre variable d'entrées (410), au nombre de quatre dans cet exemple, elles mêmes de taille spécifiable lors de la configuration afin d'adapter au mieux les tables aux données utilisateurs qu'elles doivent accueillir dans une application particulière de l'invention. Le format de chacune des entrées d'une table de donnée comprend quatre champs contenant :
- la taille de la clef (420).
- la taille des données utilisateur (430).
- la clef unique identifiant les données (440). Typiquement, cette clef est un champ de quelques dizaines d'octets incluant suffisamment d'information pour identifier le type de données associée.
- les données utilisateur elles-mêmes (450). Par exemple, ce seront des tarifs pratiqués par une compagnie aérienne pour une destination donnée et une période donnée.

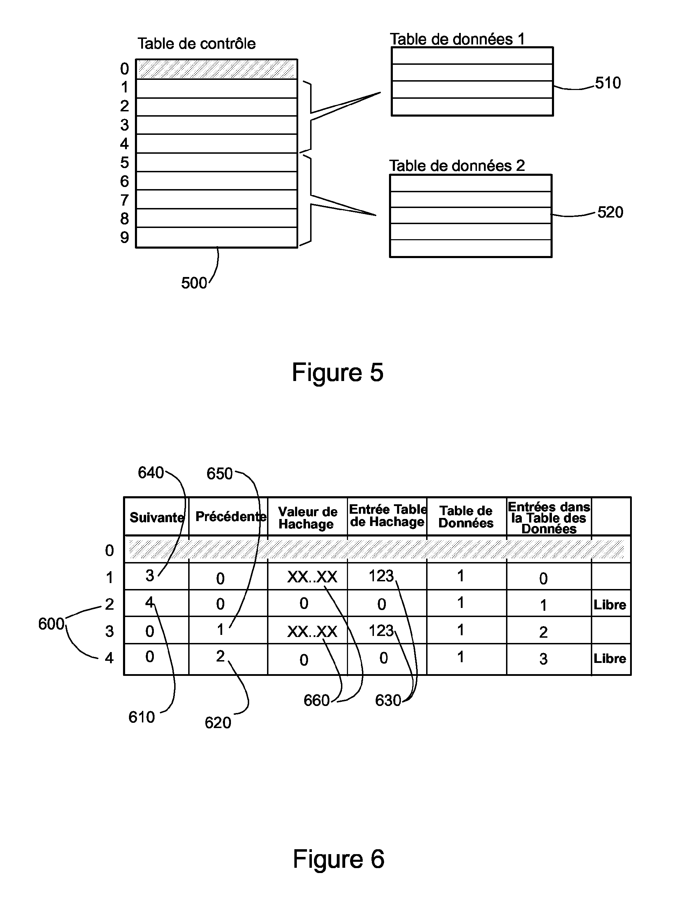

La figure 5 décrit la table de contrôle qui est utilisée pour garder trace des données utilisateurs qui sont présentes à un instant donné dans une ELC. II y a une correspondance un pour un entre les entrées de la table de contrôle (500) et celles des données (510, 520). Le nombre d'entrées dans la table de contrôle est donc le même que le nombre maximum de tables de données qui a été spécifiée au moment de la configuration, multiplié par le nombre d'entrées dans chacune de ces tables. Dans l'exemple simple de la figure 5, qui montre seulement deux tables de données, la première (510) comprenant quatre entrées et la seconde (520) cinq, la table de contrôle associée (500) comprend alors un total de 9 entrées actives.

On notera que l'entrée 0 de ces tables est toujours inutilisée pour permettre que le champs 0 ait une signification particulière : celle d'indiquer une absence de référence à une entrée.

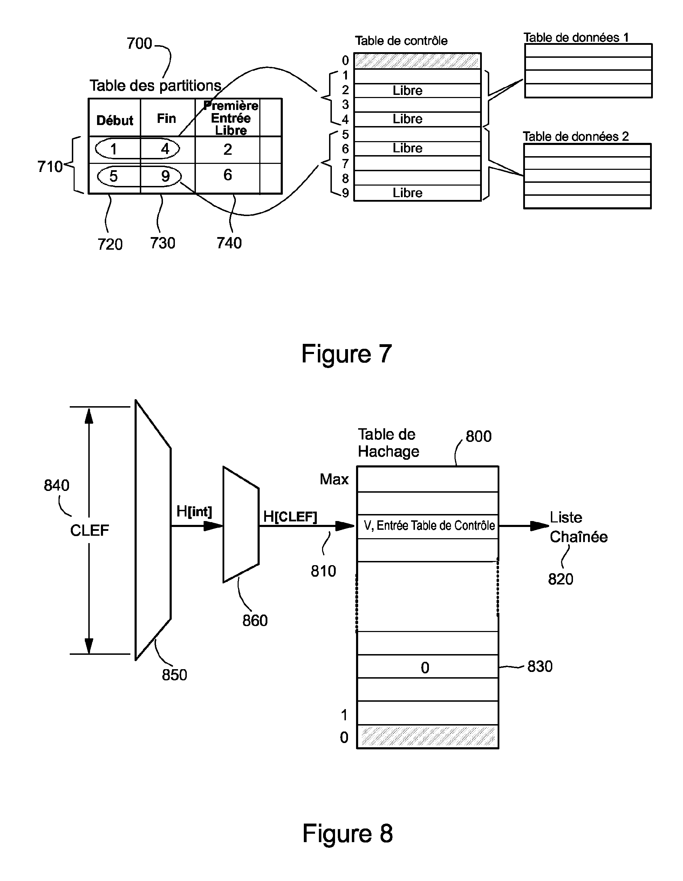

Chaque entrée de la table de contrôle comprend les informations suivantes :
- La valeur de hachage de la clef associée aux données
- La date d'insertion des données
- La date d'expiration des données
- La taille des données mémorisées à l'entrée correspondante de la table des données.
- L'entrée suivante dans la liste chaînée des entrées (libres ou utilisées) des tables de contrôle et de données ou la valeur 0 s'il n'y a pas d'autre entrée chaînée.
- L'entrée chaînée précédente ou la valeur 0 s'il n'y a pas d'autre entrée chaînée.
- L'entrée correspondante de la table de hachage qui est décrite avec la figure 8 ou la valeur 0 s'il s'agit de la liste chaînée des entrées libres.
- Le numéro de la table de données associée à cette entrée de la table de contrôle.
- L'entrée correspondante dans la table des données
- Le compteur d'utilisation (pour déterminer laquelle des entrées a été la moins récemment utilisée)
- Des paramètres divers incluant notamment un indicateur binaire pour marquer que l'entrée correspondante est libre et peut être utilisée.

La figure 6 donne un exemple de ce que pourrait contenir la partition de la table de contrôle correspondant à la table de donnée 1 de la figure 5. Dans un souci de clarté les paramètres de la liste ci-dessus n'apparaissent pas tous dans la table de la figure 6.

Dans cet exemple, les entrées 2 et 4 sont libres (600). Elles sont doublement chaînées, pour pouvoir parcourir la liste dans les deux directions, et pourraient être utilisés pour mémoriser des données utilisateurs. L'entrée libre 2 référence donc l'entrée libre suivante, la 4 (610). Cette dernière référence l'entrée libre précédente, la 2 (620).

Les entrées utilisées 1 et 3 appartiennent ici à une même liste chaînée qui sert à résoudre les collisions provenant du hachage identique de clefs pourtant différentes. Elles référencent une entrée particulière de la table de hachage (630) l'entrée 123. La table de hachage et le hachage des clefs d'identification sont discutés en détail dans la figure 8 ci-après. Comme la liste des entrées libres, celle pour résoudre les collisions est aussi doublement chaînée : l'entrée 1 référence l'entrée utilisée suivante (640), la 3, qui elle-même référence la précédente (650) de la liste, la 1.

Comme déjà discuté les valeurs nulles des colonnes 'entrée suivante' et 'entrée précédente' ne font référence a aucune entrée et commencent ou terminent une liste chaînée.

La figure 7 décrit la table des partitions (700). Comme son nom le suggère la table des partitions sert à stocker les informations nécessaires pour déterminer comment la table de contrôle et celles de données sont organisées et partitionnées. II y a donc autant d'entrées (710) dans la table de partition qu'il y a de tables de données, soient deux avec l'exemple des figures précédentes. Chacune des entrées de la table des partitions, qui référence la table de données correspondante (la première entrée référence la table n°1 et ainsi de suite), comprend les paramètres suivants, qui, par souci de clarté, n'apparaissent cependant pas tous dans le schéma de la table des partitions de la figure 7 :
- L'indice, dans la table de contrôle, de la première entrée de la partition correspondante (720)
- L'indice de la dernière entrée (730)
- Le nombre d'entrées de cette partition
- La taille des entrées dans cette partition
- Le nombre d'entrées libres
- La première entrée de la liste chaînée des entrées libres (740)
- Un indicateur de verrouillage de la partition
- L'indice, dans la table de contrôle, d'où la prochaine recherche d'une entrée susceptible d'être enlevée devra commencer.

La figure 8 décrit la table de hachage (800) qui est le point d'entrée pour toute recherche dans une ELC.

Le point d'entrée dans la table de hachage (810) est la valeur résultant du hachage de la clef d'identification des données. Clef unique, associée aux données, et qui est décrite dans les figures précédentes. Pour les raisons déjà mentionnées l'entrée 0 doit rester inutilisée et la fonction de hachage doit retourner une valeur comprise entre 1 et la borne supérieure d'adressage de la table de hachage. La table de hachage est paramétrable lors de la configuration du système. L'invention ne suppose pas l'utilisation d'une fonction de hachage particulière. Afin d'essayer d'obtenir un minimum de collisions, objectif ultime de toute fonction de hachage, éventuellement en fonction de la structure des clefs, on pourra choisir l'une ou l'autre des nombreuses fonctions et méthodes de hachage qui ont été proposées dans l'abondante littérature technique traitant de ce sujet. La fonction de hachage devra cependant être choisie, ou adaptée, pour que la valeur 0 soit toujours exclue.

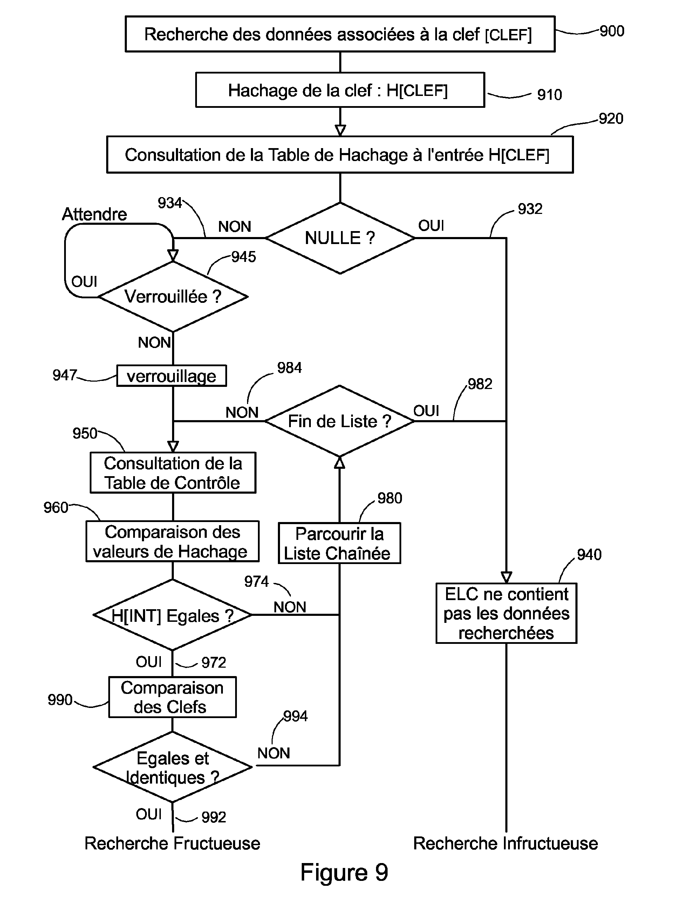

Dans un mode préféré de mise en oeuvre de l'invention, représenté sur la figure 8, la clef unique d'identification (840), qui nécessite typiquement de 50 à 100 octets, subi un premier hachage (850) pour obtenir une valeur s'inscrivant, par exemple, dans un champ de 64 bits et dénommé ci-après H[int]. La table de hachage ne pouvant cependant comprendre en pratique 2⁶⁴ entrées, un deuxième hachage (860) de H[int], pour obtenir une table (800) de taille raisonnable, est effectué. Par exemple, on pourra vouloir ramener le champ de 64 bits à un champ de 18 bits soit environ 256 kilo entrées (2¹⁸). L'avantage de procéder à un double hachage est de pouvoir concilier une table de hachage de taille raisonnable tout en permettant la comparaison, pour lever le doute en cas de collision dans la table de hachage, sur un champ de bits (64 bits) rapidement manipulable par un processeur. Un choix judicieux de la première fonction de hachage permet en effet d'obtenir une probabilité de collision quasi nulle alors même que les collisions seront plus nombreuses après une réduction supplémentaire à, par exemple, 18 bits. Une comparaison complète des clefs, comprenant de 50 à 100 octets, n'aura ainsi quasiment jamais à être effectué plus d'une fois comme discuté plus avant avec la figure 9.

Si on se réfère de nouveau à la figure 6 c'est donc la valeur de hachage intermédiaire H[int], comprenant 64 bits dans l'exemple ci-dessus, qui est présente dans la table de contrôle (660) et qui sera utilisée en premier lieu afin d'accélérer les comparaisons.

La valeur finale de hachage (810) de la clef associée aux données H[CLEF] est utilisée pour consulter la table de hachage. L'entrée correspondante contient les informations suivantes :
- Un indicateur de verrouillage (V) de l'entrée pour permettre qu'un seul processus à la fois puisse modifier la liste chaînée (820) commençant à cette entrée de la table de hachage. Cet aspect de l'invention est discuté plus loin dans la description.
- La première entrée, dans la table de contrôle, de la liste chaînée utilisée pour résoudre les possibles collisions résultant du hachage des clefs. Bien entendu, si le hachage des clefs de données ne donne aucune collision à une entrée particulière de la table de hachage, la liste chaînée correspondante se réduira à un seul élément.

Les valeurs nulles dans la table de hachage (830) ne référencent aucune entrée de la table de contrôle. Aucune des clefs de données ne donne une valeur de hachage pour cette entrée.

La figure 9 décrit la méthode d'accès (900) aux données dans une ELC. La recherche des données dans une ELC commence par le hachage de la clef (910) associée aux données recherchée. La valeur obtenue sert à adresser la table de hachage précédemment décrite (920). Si l'entrée correspondante est nulle la recherche peut être déclarée tout de suite infructueuse (932). Ce résultat est indiqué immédiatement (940) au processus recherchant les données pour l'informer qu'elles ne sont pas présentes dans l'ELC interrogée.

Si l'entrée adressée n'est pas nulle (934), la table de contrôle de l'ELC doit être lue à l'entrée référencée par la table de hachage (950). Cette entrée contient le premier élément, possiblement le seul, d'une liste chaînée d'entrées susceptibles de contenir l'information recherchée.

Cette consultation de la table de contrôle ne se fera cependant pas immédiatement si l'entrée correspondante est verrouillée par un autre processus (945). II faudra alors attendre que ce dernier déverrouille l'entrée pour continuer. Le processus en cours, s'il est susceptible d'entraîner une modification des tables (enlèvement ou insertion), verrouille à son tour l'entrée de la table de hachage (947).

Une première comparaison des valeurs de hachage de clef est effectuée (960). C'est-à-dire que l'on compare d'abord la valeur du hachage de la clef recherchée à celle extraite de la table de contrôle. Comme discuté dans la figure 8, dans un mode préféré de réalisation de l'invention, la comparaison s'effectue sur une valeur intermédiaire de hachage H[int].

Si elles diffèrent (974), la recherche doit continuer en parcourant la liste chaînée (980) si elle contient plus d'un élément. S'il n'y a qu'un seul élément, ou si l'on a atteint le dernier élément de la liste (982) la recherche doit être déclarée infructueuse (940).

Si les valeurs de hachage sont cependant identiques (972) la clef recherchée est possiblement trouvée. N'importe quelle fonction de hachage pouvant cependant retourner deux valeurs identiques de hachage, en partant de clefs différentes, ceci doit être vérifié. Pour lever le doute, les clefs doivent alors être comparée (990). Dans un mode préféré de réalisation de l'invention, pour accélérer la comparaison, la taille de la clef recherchée est d'abord comparée à celle qui est mémorisée dans la table des données (à l'entrée correspondant à celle de la table de contrôle). Si les clefs sont de tailles différentes, elles ne peuvent être identiques et la recherche doit continuer (994), comme précédemment, en parcourant la liste chaînée, si elle contient plus d'un élément. Sinon la recherche doit être déclarée infructueuse (940).

Si les tailles des clefs sont bien égales une comparaison complète de celles-ci est finalement effectuée. Si les clefs sont effectivement identiques (992) la recherche est fructueuse. Les données recherchées sont présentes dans la table de données. Si les clefs diffèrent la recherche doit continuer, comme précédemment, en parcourant la liste chaînée.

On notera qu'une seule comparaison complète des clefs (de 50 à 100 octets) sera le plus souvent nécessaire quand les données ont été effectivement retrouvées. La probabilité d'avoir à faire plus d'une comparaison complète des clefs dépend de l'efficacité de la première fonction de hachage retenue pour minimiser les collisions et décrite dans la figure 8. Comme déjà discuté cette probabilité est quasi nulle.

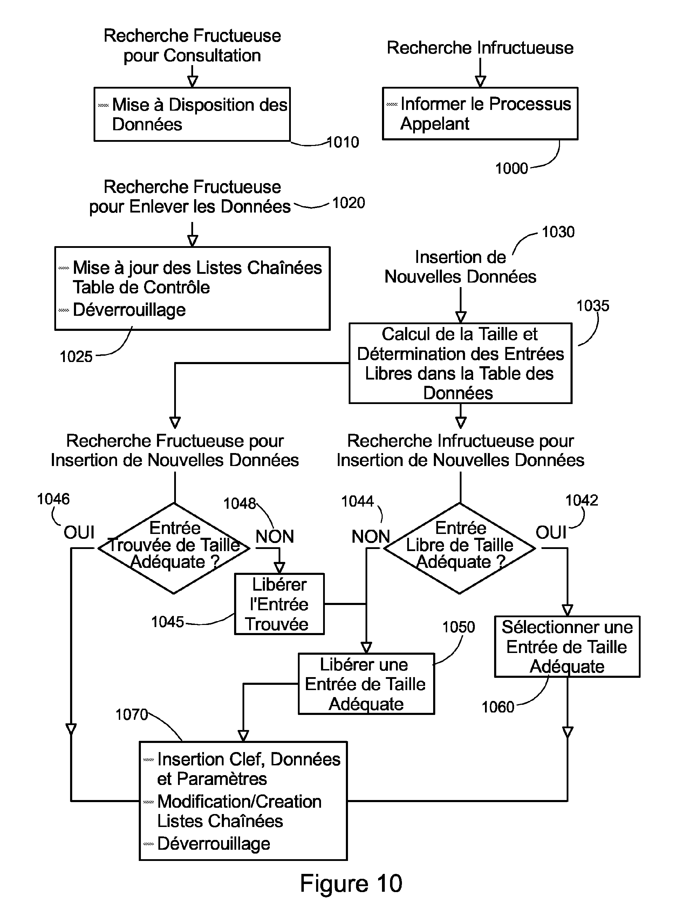

La figure 10 décrit les différentes actions qui suivent la recherche de données dans une ELC.

Dans tous les cas, si la recherche est infructueuse, le processus à l'origine de la recherche en est informé (1000).

Si la recherche est fructueuse et a été initiée par un processus en vue de consulter les données celles-ci sont extraites de la table de données et mises à disposition du processus à l'origine de la requête (1010).

Si la recherche est fructueuse et a été initiée par un processus dans le but d'enlever (1020) les données correspondantes de l'ELC, la table de contrôle doit être modifiée (1025). L'entrée correspondante de la partition doit être enlevée de la liste chaînée des entrées utilisées de cette partition et ajoutée à celle des entrées libres. L'enlèvement d'une entrée de la liste chaînée des entrées utilisées se fait évidemment en reconstituant, si nécessaire, la liste chaînée par modification des champs entrée 'suivante' et 'précédente' comme indiqué dans la figure 6.

Si le déroulement de l'insertion de nouvelles données (1030) dans une ELC dépend en premier lieu du fait que la clef y est déjà présente ou non, l'insertion demande toujours que la taille requise pour pouvoir insérer ces données soit d'abord calculée (1035) afin de déterminer lesquelles des entrées libres des tables de données sont utilisables.

Si la recherche a été infructueuse l'insertion dépendra alors de savoir s'il reste au moins une place libre de taille adéquate pour accueillir les nouvelles données. Si c'est le cas (1042) une entrée libre est sélectionnée (1060) et l'insertion des nouvelles données est effectuée (1070) ce qui inclut la modification ou la création de listes chaînées dans la table de contrôle.

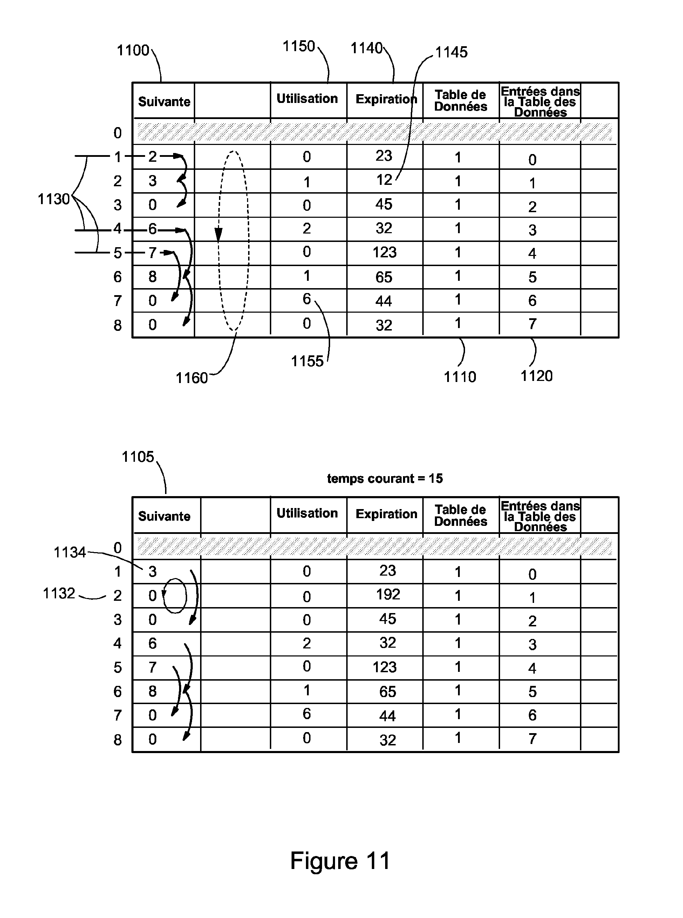

Si il n'y a pas de place libre de taille adéquate (1044) il faut alors libérer une place dans l'ELC (1050) pour pouvoir procéder à l'insertion (1070). La méthode pour libérer une place est décrite plus précisément dans la figure 11.

Si la recherche a été fructueuse, la clef recherchée est déjà présente, il s'agit d'une modification des données contenues dans la table des données. La question se pose alors de savoir s'il y a suffisamment de place pour mémoriser les nouvelles données dans la même entrée. Si la réponse est positive (1046) on peut procéder immédiatement à l'insertion (1070). Cependant, si la taille ne convient pas (1048), il faudra comme précédemment libérer une entrée de taille adéquate (1050). Préalablement on aura aussi libéré l'entrée dont la taille s'avère insuffisante pour qu'elle puisse être réutilisée (1045). Cette étape est équivalente à celle déjà décrite ci-dessus et qui consiste à enlever des données de l'ELC (1020).

A propos de la figure 10 on notera enfin qu'à l'issue d'une opération entraînant une modification des tables, c'est-à-dire les opérations d'enlèvement (1025) ou d'insertion (1070) l'entrée correspondante de la table de hachage doit être déverrouillée puisque l'opération est terminée.

La figure 11 décrit plus particulièrement l'étape (1050) de la figure 10 qui consiste à rechercher la meilleure entrée à libérer quand il n'y a plus de place libre pour accueillir les nouvelles données à insérer. La méthode est décrite en utilisant un exemple d'une partition de la table de contrôle (1100) comprenant 8 entrées, de taille suffisante pour accueillir les nouvelles données, toutes utilisées. Par souci de clarté, seuls sont représentés les champs de la table de contrôle nécessaires à la compréhension du mécanisme d'insertion.

Dans cet exemple la partition, qui référence la table de données n° 1 (1110) et les entrées 0-7 (1120), comprend 3 listes chaînées (1130), commençant respectivement aux adresses 1, 4 et 5 et comprenant respectivement 3, 3 et 2 entrées. Les débuts de chaînes sont eux-mêmes adressés par la table de hachage déjà décrite.

Pour libérer une entrée l'algorithme d'insertion va utiliser l'une ou l'autre ou les deux informations suivantes présentes dans la table de contrôle :
- Le temps (heure/date) auquel la validité des données associées à l'entrée va expirer (1140). Ce temps doit être comparé au temps courant pour déterminer, en parcourant toutes les entrées de la partition, si l'une des entrées est déjà périmée et peut être enlevée. En pratique ce temps, comme montré, prend la forme d'une valeur qu'un simple compteur doit atteindre quand le temps de validité des données expirera.
- L'utilisation effective des entrées (1150) de telle façon que l'on puisse déterminer quelle est l'entrée qui est restée inutilisée depuis le plus longtemps (moins récemment utilisée ou 'LRU' c'est-à-dire 'least recently used' dans la littérature technique en langue anglaise sur ces sujets). Dans l'exemple de la figure 11 la valeur la plus élevée du champ 'utilisation' indique l'entrée restée inutilisée depuis le plus longtemps c'est-à-dire, celle à l'adresse 7 de la table de contrôle (1155). C'est cette entrée qui serait donc susceptible d'être remplacée.
   En fonction du type d'utilisation de l'invention les critères pour choisir d'enlever une entrée plutôt qu'une autre pourront être réglés très différemment. Une utilisation habituelle de ces paramètres consiste à regarder d'abord si il y a une entrée dont les données sont périmées. S'il y a au moins une entrée qui satisfait ce critère c'est par exemple la première trouvée, lorsque l'on parcourt toutes les entrées (1160), qui est sélectionnée. Si aucune n'a de données périmées on pourra alors choisir d'enlever celle des entrées qui est restée inutilisée depuis le plus longtemps (1155). Pour éviter cependant d'enlever des données trop vite un seuil pourra être attribué pour prendre en compte ce dernier paramètre. II pourra alors se produire que les critères d'enlèvement d'une entrée ne soient pas satisfaits dans un premier temps auquel cas l'algorithme devra prévoir une stratégie de repli, moins contraignante, comme celle qui permettrait de choisir une entrée dont le temps d'expiration est le plus près possible du temps courant.
   On notera que si l'invention ne suppose pas une méthode particulière d'utilisation de ces paramètres pour libérer une entrée elle fait cependant explicitement l'hypothèse qu'une entrée sera toujours libérée pour pouvoir accueillir de nouvelles données dans le cache.
   L'exemple de la figure 11 suppose que le temps courant ayant une valeur de 15 l'entrée 2 de la table de contrôle peut être enlevée puisque les données de cette entrée ont expiré au temps 12 qui est antérieur (1145). Comme l'entrée 2 faisait partie d'une liste chaînée celle-ci doit être modifiée (1134) et la nouvelle entrée, qui ne comprend qu'un seul élément, insérée (1132). Le nouvel état de la partition est donc comme indiqué dans le tableau du bas (1105).
   Dans cet exemple on a supposé implicitement que la nouvelle entrée correspondait aussi à une nouvelle entrée dans la table de hachage et qu'il n'y a donc pas de collision. On aura bien sûr compris que la nouvelle entrée pourrait correspondre à une valeur de hachage qui est déjà utilisée. Auquel cas elle devrait être ajoutée à la liste chaînée correspondante au lieu de former une liste supplémentaire comprenant pour l'instant un seul élément. La manipulation de listes chaînée est une pratique bien connue de ceux qui sont experts dans ce domaine et n'est donc pas décrit plus avant.
   Comme déjà discuté dans le cours de la description les processus sont libres d'utiliser une ELC concurremment. Seules deux restrictions s'appliquent pour éviter qu'un processus ne puisse utiliser des données incomplètement modifiées par un autre processus.
- Comme déjà indiqué dans la figure 8 chaque entrée de la table de hachage comprend un indicateur de verrouillage pour empêcher que deux processus puissent tenter de modifier simultanément une entrée de l'ELC. Comme montré plus précisément à l'étape (945) dans la figure 9, l'accès est verrouillé si un processus devant modifier les tables de données s'exécute déjà à partir de cette entrée. II peut cependant y avoir autant d'accès simultanés à une ELC qu'il y a d'entrées différentes dans la table de hachage. Seuls les accès multiples à partir d'une même valeur de hachage, pour des opérations devant entraîner une modification des tables, ne sont pas possibles puisqu'ils conduiraient à travailler sur de mêmes listes chaînées.
- II existe aussi un indicateur de verrouillage dans les entrées de la table des partitions décrite dans la figure 7. Le but de ce verrou est de protéger la mise à jour des listes chaînées d'entrées libres que des processus indépendants, qui travailleraient dans une même partition, voudraient modifier. Les entrées de la table des partition sont verrouillées notamment quand on libère de la place c'est-à-dire aux étapes (1045), (1050) ou (1025) décrites en figure 10 et déverrouillées dans les mêmes conditions que celles de la table de hachage.

Ainsi, les opérations initiées par des processus entraînant une modification des tables de données s'exécutent toujours exhaustivement avant que les entrées en cours de modification puissent être à nouveau utilisées par un autre processus. Les processus devant travailler sur des entrées communes des tables de contrôles s'excluent mutuellement pendant leur exécution.

Comme indiqué dans la figure 11, on aura noté par ailleurs que l'algorithme d'insertion suppose que l'on puisse avoir à libérer une entrée dans une table de contrôle pleine et qu'il faut alors parcourir cette table (1160) pour sélectionner l'entrée la plus appropriée. Pour éviter qu'un processus ne puisse verrouiller une entrée pendant un temps trop long l'invention prévoit que ce parcours pourra être borné, par exemple en spécifiant un nombre maximum de lectures consécutives de la table de contrôle. C'est pourquoi la table de partition, décrite en figure 7, inclut aussi un paramètre pour spécifier d'où la recherche d'une entrée doit reprendre à chaque fois que ce mécanisme est mis en jeu, ceci afin d'éviter que le parcours de la table de contrôle ne s'effectue toujours à partir d'un même point, par exemple la première entrée. Ceci permet que toutes les entrées soient finalement parcourues et qu'elles aient, chacune, l'opportunité d'être remplacée.

Les processus étant de durée finie, ou étant bornés en ce qui concerne ceux qui demandent de libérer une entrée en parcourant la table de contrôle, aucun verrouillage permanent ne peut donc se produire.

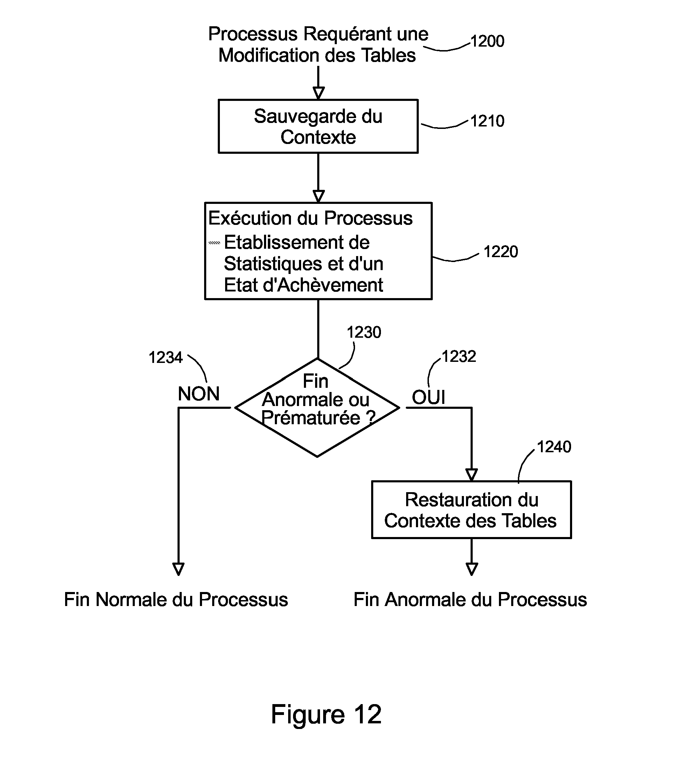

La figure 12 explicite le cas des processus qui doivent normalement altérer (1200), au cours de leur exécution, les tables qui contrôlent une ELC.

C'est avant tout le cas de l'insertion de nouvelles données, opération décrite en figure 10, qui demande que l'on crée ou que l'on modifie des listes chaînées

Un processus qui doit modifier les tables d'une ELC, et qui n'irait pas jusqu'à son terme, ne doit pas laisser celles-ci dans un état incohérent, par exemple en perturbant des listes chaînées qui ne pourraient plus être parcourues normalement ce qui condamnerait les entrées associées des tables de données. L'invention prévoit que les processus potentiellement dangereux doivent sauvegarder le contexte des tables (1210) avant qu'ils ne s'exécutent, c'est-à-dire qu'ils doivent mémoriser toutes les informations nécessaires en vue de pouvoir restaurer l'état antérieur des tables s'ils ne s'exécutaient pas complètement ou si une anomalie était détectée en cours d'exécution.

Chaque processus a un identificateur unique (ID) et utilise une zone mémoire de travail dédiée dans laquelle ces informations sont mémorisées pendant toute la durée de son exécution. Par exemple, si un verrou est créé dans la table de hachage, l'identificateur du processus est enregistré ainsi que la référence de l'entrée de la table de hachage correspondante. D'une façon similaire les liens d'une liste chaînée qui va être modifiée par un processus sont enregistrés. Si le processus rencontre un problème (1232), une fonction associée aux processus est appelée qui se chargera de restaurer l'état antérieur (1240). Dans les exemples ci-dessus le verrou de la table de hachage sera relâché et les liens de la liste chaînée rétablis. Au cours de son exécution (1220) chaque processus établit non seulement des statistiques, qui servent entre autre à mesurer l'efficacité de la mémoire cache, mais aussi un état d'achèvement qui est utilisé (1230) pour déterminer si le processus s'est terminé normalement (1234).

La mise en oeuvre de la sauvegarde et de la restauration du contexte des tables ainsi que l'établissement d'un état d'achèvement du processus ne font pas appel à des mécanismes propres à l'invention. Toutes les méthodes bien connues des spécialistes de l'ingénierie logicielle pour mettre en oeuvre de tels mécanismes sont susceptibles d'être employées et ne sont donc pas décrites plus avant.

## Revendications

1. Une méthode pour maintenir la cohérence d'au moins une mémoire cache (150), la dite au moins une mémoire cache accessible par une pluralité de processus indépendants (200), la dite pluralité de processus pouvant partager des données communes (210), la dite pluralité de processus effectuant des opérations de recherche (900) simultanées des dites données, les dites opérations de recherche suivies optionnellement d'une mise à disposition (1010), d'un enlèvement (1020) ou d'une insertion (1030) des dites données, la dite méthode dans laquelle :
les dites opérations de recherche, d'enlèvement et d'insertion, s'exécutent exhaustivement une fois qu'elles ont été initiées par la dite pluralité de processus indépendants ;
les dites opérations de recherche, d'enlèvement et d'insertion, initiées par la dite pluralité de processus indépendants, s'exécutent exclusivement l'une de l'autre quand elles opèrent sur les dites données communes ;
les dites opérations d'enlèvement ou d'insertion sont chacune complètement réversibles.

2. La méthode selon la revendication 1 faisant appel à une pluralité de tables pour organiser la dite mémoire cache, la dite pluralité de tables incluant :
une table de données (400) ;
une table de contrôle (500) ;
une table des partitions de la table de contrôle (700) ;
une table de hachage (800).

3. La méthode selon la revendication 1 ou 2 où chacune des dites opérations de recherche initiée par l'un des processus débute par l'interrogation d'une entrée (810) de la dite table de hachage (800), la dite entrée étant alors verrouillée (947) temporairement pour tous ceux de la dite pluralité de processus qui ne l'ont pas initiée et seulement si la dite opération de recherche doit entraîner une modification du contenu de la dite mémoire cache.

4. La méthode selon la revendication 3 dans laquelle la dite entrée verrouillée est déverrouillée à l'issue d'une des dites opérations d'enlèvement (1025) ou d'insertion (1070).

5. La méthode selon l'une quelconque des revendications ci-dessus dans laquelle les dites opérations de recherche suivies d'une des dites opérations de mise à disposition, d'enlèvement ou d'insertion des dites données ont une durée finie ou bornée d'exécution.

6. La méthode selon la revendication 1 ou 2 dans laquelle les dites opérations réversibles d'enlèvement et d'insertion incluent les étapes suivantes consistant à :
sauvegarder le contexte des dites entrées de tables à modifier (1210) avant que les dites opérations ne s'exécutent ;
établir, en cours d'exécution, un état d'achèvement (1220) des dites opérations ;
restaurer le contexte des dites entrées de tables (1240) si le dit état d'achèvement conclut à une fin anormale ou prématurée (1232) des dites opérations.

7. La méthode selon la revendication 1 ou 2 dans laquelle la dite opération d'insertion inclut une étape de libération (1050) d'une entrée dans une partition de la dite table de contrôle si la dite partition est pleine, la dite méthode consistant à :
parcourir (1160) la dite partition afin d'opérer un choix, le dit parcours étant possiblement interrompu si un temps de parcours maximum est atteint ;
sélectionner l'entrée (1145) la plus appropriée parmi les entrées parcourues ;
libérer la dite l'entrée.

8. La méthode selon la revendication 7 dans laquelle l'étape de sélection d'une entrée à libérer utilise les informations suivantes pour effectuer le dit choix :
une comparaison du temps d'expiration (1140) associé aux données de la dite entrée au temps courant ;
une mesure de l'utilisation effective (1150) par les dits processus des données de la dite entrée.

9. La méthode selon l'une quelconque des revendications ci-dessus incluant une étape de verrouillage et une étape de déverrouillage de la table des partitions (700) lors d'une mise à jour des entrées libres (740).

10. La méthode selon l'une quelconque des revendications ci-dessus **caractérisée en ce qu'**elle permet l'exécution simultanée des dits processus indépendants qui utilisent des entrées (810) différentes dans la dite table de hachage.

11. La méthode selon l'une quelconque des revendications ci-dessus **caractérisée en ce qu'**elle permet qu'une pluralité de mémoires cache coexistent (300) et que les dits processus (310) puissent utiliser la dite pluralité de mémoires cache en même temps.

12. Un système, et notamment une mémoire cache (150) utilisée pour mettre à disposition d'une pluralité d'unités centrales de traitement (110) des données stockées dans une mémoire de masse (130), le dit système comprenant des moyens adaptés pour mettre en oeuvre la méthode décrite dans l'une quelconque des revendications précédentes.

13. Un support lisible par ordinateur comprenant les instructions d'un programme exécutable par le dit ordinateur, le dit programme mettant en oeuvre la méthode selon l'une quelconque des revendications 1 à 11.
